# EUROPEAN PATENT SPECIFICATION

(11) **EP 3 697 272 B1**
(45) Date of publication and mention of the grant of the patent: **08.12.2021**
(21) Application number: 18803777.4
(22) Date of filing: 19.10.2018
(51) Int. Cl.: A47J 31/52

(54) **AUTOMATIC BEVERAGE PREPARATION MACHINE**
AUTOMATISCHE GETRÄNKEZUBEREITUNGSMACHINE
MACHINE AUTOMATIQUE DE PRÉPARATION DE BOISSONS

(30) Priority: 19.10.2017 EP 17197405; 29.11.2017 IT 201700137384
(43) Date of publication of application: 26.08.2020
(73) Proprietor: Carimali S.p.A. Con Socio Unico, 24121 Bergamo (IT)
(72) Inventor: DOGLIONI MAJER, Andrea, 24040 Chignolo d'Isola (BG) (IT)
(74) Representative: Bergadano, Mirko
(86) International application number: PCT/IB2018/058156
(87) International publication number: WO 2019/077577

(56) References cited:
- EP-A1- 3 245 917
- US-A- 5 094 153
- US-B1- 9 560 863

## Description

### Technical Field of the Invention

The invention relates to automatic beverage preparation machines, in particular to machine for preparing hot beverages from brewable substances brewed with pressurised hot water, such as coffee-based beverages, for example espresso coffee, American coffee, or freshly brewed coffee, etc., or tea-based beverages, and in particular to the electronic control of automatic beverage preparation machines aimed at implementing new functionalities.

### State of the Art

Automatic beverage preparation machines are known, which may comprise either a single brewing group for producing of one and the same type of beverage via a given hot water-based brewing process, for example espresso coffee or freshly brewed coffee, or two brewing groups for producing two different types of beverages via two different brewing processes from either one and the same brewable substance or different brewable substances, e.g., espresso coffee and freshly brewed coffee, or espresso coffee and tea.

For example, automatic beverage preparation machines are known, which comprise a first brewing group configured to carry out a process for brewing coffee powder with high pressure hot water to produce espresso coffee, and a second brewing group configured to carry out a process for brewing coffee powder with low pressure hot water for producing freshly brewed coffee.

Furthermore, automatic beverage preparation machines are known, which comprise a first brewing group configured to carry out a process for brewing coffee powder with high pressure hot water for producing espresso coffee, and a second brewing group configured to carry out a process for brewing tea powder with low pressure hot water for producing a tea beverage.

Further examples of automatic beverage preparation machines are described in US 9 560 863 B1 and EP 3 245 917 A1. US9560863 discloses the preamble of claim 1.

### Object and Summary of the Invention

The object of the invention is to provide an automatic beverage preparation machine with a double brewing group, which shows improvements, compared to the ones currently available in the market, in terms of operating flexibility.

According to the invention, an automatic beverage preparation machine is provided, as claimed in the appended claims.

### Brief Description of the Drawings

Figure 1 schematically shows an automatic beverage preparation machine.

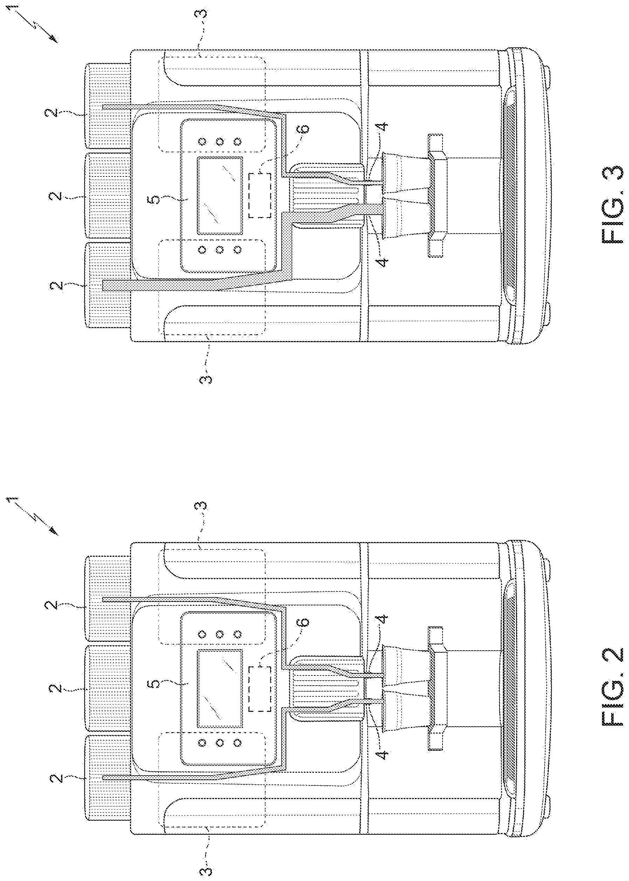

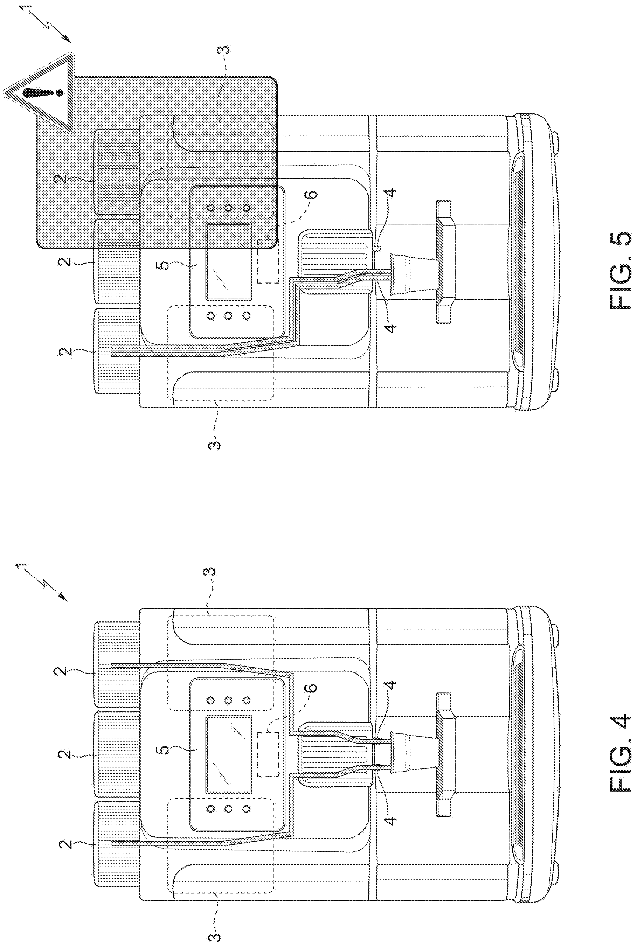

Figures 2-5 schematically show the automatic beverage preparation machine of Figure 1 in different operating modes.

### Detailed Description of Preferred Embodiments of the Invention

The invention will now be described in detail with reference to the accompanying Figures, so as to allow a person skilled in the art to carry it out and to use it. Possible changes to the embodiments described herein will be immediately evident to skilled people and the generic principles described herein can be applied to other embodiments and applications without for this reason going beyond the scope of protection of the invention set forth in the appended claims. Therefore, the invention cannot be considered as limited to the embodiments described and shown herein, but it has to be associated with the widest scope of protection possible in accordance with the principles and the features described and claimed herein.

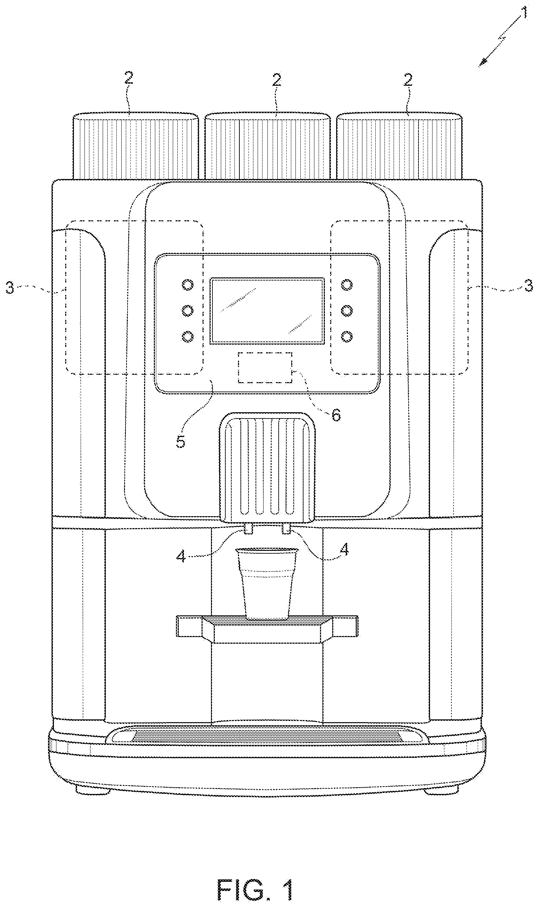

Figure 1 schematically shows an automatic beverage preparation machine according to the invention and designated as a whole with reference numeral **1.**

The automatic beverage preparation machine **1** comprises:
- an upper brewable substance storage area where a brewable substance storage unit is arranged, which comprises one or more containers **2** fillable either with one and the same type of brewable substance or with different types of brewable substances, and that may be defined either by distinct containers or by separate compartments of a single container;
- an intermediate brewing area, where a brewing unit is arranged, that comprises at least two brewing groups **3** configured to carry out one and the same brewing process to produce one and the same type of beverage from the brewable substances contained in the containers **2;** and
- a lower beverage delivery area, where a beverage delivery unit is arranged to deliver the beverages produced by the brewing groups **3,** and comprising at least two beverage delivery nozzles **4** arranged close enough to deliver the beverages either into two distinct, closely arranged container (glasses, cups, etc.) or into one single container.

In a preferred embodiment, the brewing groups **3** are configured to carrying out a process for producing espresso coffee from a brewable substance brewed with pressurised hot water.

The brewing groups **3** are fluidically connected to a common pressurised hot water source, conveniently in the form of a water heater (not shown), through a pumping unit formed of either of a pump common to both brewing groups **3** or two distinct, synchronously controlled pumps, one for each brewing group 3, to receive from the common pressurised hot water source the amount of pressurised hot water needed to carry out the brewing process. The brewing groups **3** further communicate with respective automatic feeding devices (not shown) to receive therefrom, at the beginning of a brewing cycle, dosed quantities of brewable substances necessary for the preparation of the beverages.

The association between brewing groups **3** and containers **2** and the association between brewing groups **3** and beverage delivery nozzles **4** may be defined in an extremely flexible manner depending on the context in which the automatic beverage preparation machine **1** is used, which will be explained in a clearer way below.

In particular, the association between brewing groups **3** and containers **2** may be either one-to-one, namely each brewing group **3** may be univocally associated with a single container **2** so as to receive only the brewable substance contained therein, or one-to-many, namely each brewing group **3** may be selectively associated with a group of containers **3** so as to receive the brewable substances contained therein. In the last case, the groups of containers **2** associated with the brewing groups **3** may be either disjoint, namely a container **2** may be associated with a single brewing group **3,** or partially overlapping, namely a container **2** may be associated with both brewing groups **3.**

The association between brewing groups **3** and the beverage delivery nozzles **4** may also be either one to one, namely each beverage delivery nozzle **4** may be univocally associated with A single brewing group **3** so as to receive the beverage produced thereby, or one to many, namely each beverage delivery nozzle **4** may be selectively associated with both brewing groups **3** to receive the beverages produced thereby.

Furthermore, since the brewable substances may have different forms, in particular may be available either all in the form of powder or in the form of powder and in the form of beans, which is what happens with coffee, or in the form of leaves, which is what happens with tea, in case of use of brewable substances in the form of beans, in the brewable substance storage area a grinding unit is also arranged under the containers **2** and comprising one or more grinders to grind, when needed, the brewable substances in the form of beans.

In this case, the association between containers **2** containing brewable substances in the form of beans and grinders may be either one to one, namely each grinder may be arranged to grind a brewable substance contained in a single container **2,** or one to many, namely each grinder may be arranged to grind brewable substances in different containers **3.**

The automatic beverage preparation machine **1** further comprises a user interface **5,** known and hence not described in detail, configured to cause beverages deliverable by the automatic beverage preparation machine **1** to be user-selectable.

The automatic beverage preparation machine **1** further comprises an electronic control unit **6** configured to control operation of the brewing groups **3** to cause the following beverage production modes to be selectively carried out, each in response to a corresponding single user-selection:
- a first beverage production mode, in which the two brewing groups **3** are controlled to simultaneously produce the same quantity of said beverage from respective brewable substances of one and the same type;
- a second beverage production mode, in which the two brewing groups **3** are controlled to simultaneously produce the same quantity of said beverage from respective brewable substances of different types;
- a third beverage production mode, in which the two brewing groups **3** are controlled to simultaneously produce different quantities of said beverage from respective brewable substances either of one and the same type or of different types; and
- a fourth beverage production mode, in which the two brewing groups **3** are controlled to simultaneously produce the same quantity of said beverage from respective brewable substances of one and the same type, but in a greater quantity than that produced in the first beverage production mode.

The above-described four beverage production modes basically cause the two brewing groups **3** to simultaneously and selectively produce one and the same beverage, e.g., coffee or tea, in identical or different quantities, e.g., espresso coffee and American coffee, from brewable substances either of one and the same type or of different types, wherein the term "type" is meant to encompass, with reference, for instance, to coffee, the coffee species (Arabic coffee, Robusta coffee), the coffee mixtures, the coffee grain sizes, the treatments to which the coffee was subjected, for example decaf coffee, flavoured coffee, etc.

According to the invention, the user interface **5** is conveniently further configured to cause each beverage production mode to be selectable via a corresponding single selection, regardless of whether it is manual and/or, optionally, vocal, for example through the activation of a respective selection button, regardless of whether it is hard or soft, namely consisting of a button displayed on a screen of the user interface **5**, which selection button may be conveniently associated with an intuitive representative icon, if necessary together with a brief description, of the respective beverage production mode.

In this embodiment, the electronic control unit **6** is hence configured to receive the single user-selections of the beverage production modes and to cause each beverage production mode to be implemented in response to a corresponding single user-selection.

The first beverage production mode, which may also be defined as parallel beverage production mode, causes the time needed to deliver two beverages of one and the same type and in the same quantity, for example two espresso coffees, to be halved, given the same quantity of delivered beverage, or, from another point of view, the beverage production capacity to be doubled, given the same delivery time. The parallel beverage production mode further causes operators' interventions for loading and maintaining the containers **2** to be halved, so resulting in doubling the capacity of usable brewable substances. The parallel beverage production mode typically proves to be useful in stores and bars where a large beverage delivery is required in given hours of the day.

In the parallel beverage production mode the exhausted brewable substances in the form of pods may conveniently be collected in two identical drawers arranged underneath the two brewing groups **3**, thus allowing the exhausted brewable substance collection capability to be doubled.

The parallel beverage production mode may be implemented provided that the brewing groups **3** may be supplied with one and the same brewable substance, and, hence, they may be either associated with distinct containers **2**, which are both filled with one and the same brewable substance, or may be both associated with the same container **2.**

The second beverage production mode, which may be defined as diversified, parallel beverage production mode, causes two beverages either of one and the same type or of different types to be delivered in different quantities, for example a short espresso coffee and a traditional espresso coffee, or a long espresso coffee and a cappuccino, etc.

The duration of the beverage deliveries depends on the longer one between the two beverages that needs to be delivered, but this allows different beverages to be produced and delivered in response to a single user-selection.

The diversified, parallel beverage production mode proves to be useful when varied beverages need be produced in a short time and, for this reason, the parameters of the beverage recipe is properly set to obtain these results.

The coffee used in this production mode may be different in type so as to have different settings and selections depending on the selected beverage, thus separating the beverages based on the brewing group that is used.

For example grinding and operating parameters of a brewing group **3** may be set so as to produce an Italian espresso with a dedicated type of coffee, whereas grinding and operating parameters of the other brewing group **3** may be set so as to produce a German coffee.

The third beverage production mode, which may be defined as beverage mixing mode, causes coffee blends to be carefully and automatically delivered into a single container arranged at the centre of the delivery area.

The operating parameters of the brewing groups **3** are typically set in the same way as in the diversified, parallel beverage delivery mode, but special products, differentiated in terms of costs, may be produced by creating blends between different types of coffee.

It is possible to use up to three coffees, two of them mixed together simultaneously.

The blend takes place directly in the cup and each coffee is brewed by the corresponding brewing group.

The operating parameter setting allows the grinding to be finely adjusted, thus leaving room for products potentially having thousands of different blends.

The fourth beverage production mode, which may be defined as long beverage production mode, allows long beverages to be produced without having to wait too long times due to the necessary water heating times and of the movements to be made due to the repeated cleaning operations.

In this production mode, again, the brewing groups **3**, regardless of their settings, allow the amount of time needed to be halved, as they carry out up to three parallel expulsions (6 exhausted pods) in half the time.

A dedicated management and control of the water flow and of the electrical power supplied to the water heater further allow the waiting times that are typical for this type of beverages to be reduced.

According to a further aspect of the invention, the electronic control unit **6** is further configured to:
- determine that a brewing group **3** is unable to produce a selected beverage; and
- when a brewing group **3** is determined to be unable to produce a selected beverage, assign the production of the selected beverage that should have been produced by the unable brewing group **3** to a different brewing group **3.**

In order to determine when a brewing group **3** is unable to produce a selected beverage, the electronic control unit **6** is further configured to:
- determine that a brewable substance has run out to such an extent that a selected beverage may not be produced;
- determine that a brewing group **3** is faulty or malfunctioning; and
- determine that a brewing group **3** is unable to produce a selected beverage when it is determined that a brewable substance has run out to such an extent that a selected beverage may not be produced or a brewing group **3** is faulty or malfunctioning.

This functionality allows a brewing group **3** to act as a backup for the other one, and this redundancy intervenes in case of fault or malfunctioning or, much more frequently, in case of lack of coffee.

In an automatic beverage preparation machine with a single brewing group, the fault of the brewing group due to mechanical or electrical problems causes the automatic beverage preparation machine to stop, with a consequent out of service. The same thing typically happens when the coffee container is empty, which makes it impossible for other beverages to be delivered as long as the container is not filled again.

The backup functionality, on the other hand, results, in case of fault of one of the two brewing groups **3** due to mechanical or electrical problems, in the remaining brewing group **3** to take charge of the (mechanically compatible) recipes, thus compensating for the fault and allowing the automatic beverage preparation machine to remain in service.

All the beverages selected under these conditions and displayed as redundant have delivery times that are different from the normal delivery times, because of the need to compensate for the fault.

The backup functionality proves to be particularly useful especially in case of lack of coffee, prolonging the times before having to load the containers and cause an out of service.

Furthermore, an automatic beverage preparation machine affected by a fault of a brewing group potentially keeps on working and fails to reduce the capacities and the quality of the beverages.

According to a further aspect of the invention, the electronic control unit **6** is further configured to:
- determine a number of beverage production cycles carried out by each brewing group **3**; and
- assign the production of the selected beverages to the brewing groups **3** according to a criterion based on the number of beverage production cycles carried out by each brewing group **3**, and, in particular, distribute the beverage production between the brewing groups **3** so as to keep the wear of the brewing groups **3** as uniform as possible.

This functionality, which may be defined as load balancing, allows the load of the brewing groups **3** to be balanced, thus resulting in the wear of the critical electrical, mechanical, and hydraulic components, which most jeopardize the lifecycle of the brewing groups **3**, to be levelled.

Users may hence select the beverage of interest without necessarily knowing which brewing group **3** is going to produce it, since this choice is autonomous and assigned to a managing algorithm, which operates based on the number of beverage production cycles carried out by the brewing groups **3**, identifying underuse/overuse situations affecting one of the brewing groups **3** and acting accordingly to optimize wear thereof.

By selecting this operating mode, users have the chance to use the automatic beverage preparation machine **1** as if it had one single brewing group **3**, but with the potential "life" and capacity of an automatic beverage preparation machine **1** with two brewing groups **3.** This means double capacity, double duration, double quantity of collectable grounds, etc.

The load balancing functionality may be supported by a signalling and controlling system, for example LED and cup sensor, to indicate to users where to place the cups , and, if desired, to verify that users actually placed the cups in the designated delivery point.

## Claims

1. An automatic beverage preparation machine (**1**) comprising:
- a brewable substance storage unit comprising one or more containers (**2**) fillable either with one and the same type of brewable substance or with different types of brewable substances;
- at least two automatic feeding devices to feed dosed quantities of brewable substances;
- a brewing unit comprising at least two brewing groups (**3**) configured to receive from respective automatic feeding devices, at the beginning of a brewing cycle, dosed quantities of brewable substances necessary for the preparation of selected beverages and to carry out one and the same infusion process to produce one and the same beverage, e.g., coffee, from respective brewable substances either of the same type or of different types contained in the brewable substance storage unit (**2**);
- a beverage delivery unit comprising at least two beverage delivery nozzles (**4**) to deliver the beverages produced by the brewing groups (**3**);
- a user interface (**5**) configured to allow beverages deliverable by the beverage vending machine **1** to be user-selectable; and
- an electronic control unit (6) connected to the brewing groups (**3**) and to the user interface (**5**) **characterized in that** said electronic control unit is configured to control operation of the brewing groups (**3**) to cause the following beverage production modes to be selectively performable in response to corresponding single user-selections:
- a first beverage production mode, in which the brewing groups (**3**) are controlled to simultaneously produce the same quantity of said beverage from respective brewable substances of the same type;
- a second beverage production mode, in which the brewing groups (**3**) are controlled to simultaneously produce the same quantity of said beverage from respective brewable substances of different types;
- a third beverage production mode, in which the brewing groups (**3**) are controlled to simultaneously produce different quantities of said beverage from respective brewable substances either of the same type or of different types; and
- a fourth beverage production mode, in which the brewing groups (**3**) are controlled to simultaneously produce the same quantity of said beverage from respective brewable substances of the same type, but in a greater quantity than that produced in the first beverage production mode.

2. The automatic beverage preparation machine (**1**) of claim **1**, wherein the beverage delivery nozzles (**4**) are arranged close enough to deliver the respective beverages either into distinct, closely arranged containers or in a single container.

3. The automatic beverage preparation machine (**1**) of claim **1** or **2**, wherein the electronic control unit (**6**) is further configured to:
- determine when a brewing group (**3**) is unable to produce a selected beverage; and
- when a brewing group (**3**) is determined to be unable to produce a selected beverage, assign the production of the selected beverage that should have been produced by the unable brewing group (**3**) to a different brewing group (**3**).

4. The automatic beverage preparation machine (**1**) of claim 3, wherein the electronic control unit (**6**) is further configured to:
- determine when a brewable substance has run out to such an extent that a selected beverage may not be produced;
- determine when a brewing group (**3**) is faulty or malfunctioning; and
- determine that a brewing group (**3**) is unable to produce a selected beverage when either a brewable substance has run out to such an extent that a selected beverage may not be produced or a brewing group (**3**) is faulty or malfunctioning.

5. The automatic beverage preparation machine (**1**) of any one of the preceding claims, wherein the electronic control unit (**6**) is further configured to:
- determine a number of beverage production cycles carried out by each brewing group (**3**); and
- assign the production of the selected beverages to the brewing groups (**3**) according to a criterion based on the number of beverage production cycles carried out by each brewing group (**3**).

6. The automatic beverage preparation machine (**1**) of claim 5, wherein the electronic control unit (**6**) is configured to assign the production of the selected beverages to the brewing groups (**3**) according to a criterion based on the number of beverage production cycles carried out by each brewing group (**3**) by distributing the beverage production between the brewing groups (**3**) so as to keep the wear of the brewing groups (**3**) as uniform as possible.

## Patentansprüche

1. Automatischer Getränkezubereitungsapparat (1), umfassend:
- eine Aufbewahrungseinheit für eine brühfähige Substanz, umfassend einen oder mehrere Behälter (2), der bzw. die mit ein und derselben Art brühfähiger Substanz oder mit unterschiedlichen Arten brühfähiger Substanzen befüllbar sind;
- wenigstens zwei automatische Zuführvorrichtungen zum Zuführen von dosierten Mengen an brühfähigen Substanzen;
- eine Brüheinheit, die wenigstens zwei Brühgruppen (3) umfasst, die konfiguriert sind, um von jeweiligen automatischen Zuführvorrichtungen an dem Beginn eines Brühzyklus dosierte Mengen brühfähiger Substanzen, die für die Zubereitung ausgewählter Getränke erforderlich sind, zu erhalten, und um ein und denselben Aufgießvorgang zum Erzeugen ein und desselben Getränks, z. B. Kaffee, aus jeweiligen brühfähigen Substanzen entweder der gleichen Art oder von unterschiedlichen Arten, die in der Aufbewahrungseinheit (2) für eine brühfähige Substanz enthalten sind, auszuführen;
- eine Getränkeausgabeeinheit, umfassend wenigstens zwei Getränkeausgabedüsen (4), um die Getränke, die durch die Brühgruppen (3) erzeugt wurden, auszugeben;
- eine Benutzerschnittstelle (5), die konfiguriert ist, um zu ermöglichen, dass Getränke, die durch den Getränkeverkaufsapparat (1) ausgebbar sind, durch einen Benutzer auswählbar sind; und
- eine elektronische Steuereinheit (6), die mit den Brühgruppen (3) und der Benutzerschnittstelle (5) verbunden ist,
**dadurch gekennzeichnet, dass** die elektronische Steuereinheit konfiguriert ist, um Betrieb der Brühgruppen (3) zu steuern, um zu bewirken, dass die folgenden Getränkeerzeugungsbetriebsarten in Reaktion auf entsprechende einzelne Benutzer-Auswahlen wahlweise ausführbar sind:
- eine erste Getränkeerzeugungsbetriebsart, in der die Brühgruppen (3) gesteuert werden, um gleichzeitig die gleiche Menge des Getränks aus entsprechenden brühfähigen Substanzen der gleichen Art zu erzeugen;
- eine zweite Getränkeerzeugungsbetriebsart, in der die Brühgruppen (3) gesteuert werden, um gleichzeitig die gleiche Menge des Getränks aus entsprechenden brühfähigen Substanzen unterschiedlicher Arten zu erzeugen;
- eine dritte Getränkeerzeugungsbetriebsart, in der die Brühgruppen (3) gesteuert werden, um gleichzeitig unterschiedliche Mengen des Getränks aus entsprechenden brühfähigen Substanzen entweder der gleichen Art oder von unterschiedlichen Arten zu erzeugen; und
- eine vierte Getränkeerzeugungsbetriebsart, in der die Brühgruppen (3) gesteuert werden, um gleichzeitig die gleiche Menge des Getränks aus entsprechenden brühfähigen Substanzen der gleichen Art, jedoch in einer größeren Menge als die, die in der ersten Getränkeerzeugungsbetriebsart erzeugt wurde, zu erzeugen.

2. Automatischer Getränkezubereitungsapparat (1) nach Anspruch 1, wobei die Getränkeausgabedüsen (4) nah genug angeordnet sind, um die jeweiligen Getränke entweder in separate, nah angeordnete Behälter oder in einen einzigen Behälter auszugeben.

3. Automatischer Getränkezubereitungsapparat (1) nach Anspruch 1 oder 2, wobei die elektronische Steuereinheit (6) ferner konfiguriert ist, um:
- festzustellen, wenn eine Brühgruppe (3) nicht in der Lage ist, ein ausgewähltes Getränk zu erzeugen; und
- wenn festgestellt wird, dass eine Brühgruppe (3) nicht in der Lage ist, ein ausgewähltes Getränk zu erzeugen, die Erzeugung des ausgewählten Getränks, das durch die nicht einsatzfähige Brühgruppe (3) hätte erzeugt werden sollen, einer anderen Brühgruppe (3) zuzuweisen.

4. Automatischer Getränkezubereitungsapparat (1) nach Anspruch 3, wobei die elektronische Steuereinheit (6) ferner konfiguriert ist, um:
- festzustellen, wenn eine brühfähige Substanz in einem solchen Ausmaß verbraucht wurde, dass ein ausgewähltes Getränk nicht erzeugt werden kann;
- festzustellen, dass eine Brühgruppe (3) defekt ist oder eine Fehlfunktion aufweist; und
- festzustellen, dass eine Brühgruppe (3) nicht in der Lage ist, ein ausgewähltes Getränk zu erzeugen, wenn entweder eine brühfähige Substanz in einem solchen Ausmaß aufgebraucht wurde, dass ein ausgewähltes Getränk nicht erzeugt werden kann, oder eine Brühgruppe (3) defekt ist oder eine Fehlfunktion aufweist.

5. Automatischer Getränkezubereitungsapparat (1) nach einem der vorhergehenden Ansprüche, wobei die elektronische Steuereinheit (6) ferner konfiguriert ist, um:
- eine Anzahl von Getränkeerzeugungszyklen, die durch die jeweilige Brühgruppe (3) ausgeführt worden sind, festzustellen; und
- die Erzeugung der ausgewählten Getränke den Brühgruppen (3) gemäß einem Kriterium basierend auf der Anzahl von Getränkeerzeugungszyklen, die durch die jeweilige Brühgruppe (3) ausgeführt worden sind, zuzuweisen.

6. Automatischer Getränkezubereitungsapparat (1) nach Anspruch 5, wobei die elektronische Steuereinheit (6) konfiguriert ist, um die Erzeugung der ausgewählten Getränke den Brühgruppen (3) gemäß einem Kriterium auf der Basis der Anzahl an Getränkeerzeugungszyklen, die durch die jeweilige Brühgruppe (3) ausgeführt worden sind, zuzuweisen, indem die Getränkeerzeugung zwischen den Brühgruppen (3) so verteilt wird, um die Abnutzung der Brühgruppen (3) so gleichmäßig wie möglich zu halten.

## Revendications

1. Machine de préparation automatique de boisson (1) comprenant :
- une unité de stockage de substance pouvant être brassée comprenant un ou plusieurs récipients (2) pouvant être remplis d'un seul et même type de substance pouvant être brassée ou de types différents de substances pouvant être brassées ;
- au moins deux dispositifs d'acheminement automatiques pour acheminer des quantités dosées de substances pouvant être brassées ;
- une unité de brassage comprenant au moins deux groupes de brassage (3) configurés pour recevoir à partir de dispositifs d'acheminement automatiques respectifs, au début d'un cycle de brassage, des quantités dosées de substances pouvant être brassées nécessaires pour la préparation de boissons sélectionnées et pour réaliser un seul et même processus d'infusion afin de produire une seule et même boisson, par exemple du café, à partir de substances pouvant être brassées respectives soit du même type soit de types différents contenues dans l'unité de stockage de substance pouvant être brassée (2) ;
- une unité de distribution de boisson comprenant au moins deux buses de distribution de boisson (4) pour distribuer les boissons produites par les groupes de brassage (3) ;
- une interface utilisateur (5) configurée pour permettre à des boissons distribuables par le distributeur automatique de boisson (1) de pouvoir être sélectionnées par l'utilisateur ; et
- une unité de commande électronique (6) connectée aux groupes de brassage (3) et à l'interface utilisateur (5), **caractérisée en ce que** ladite unité de commande électronique est configurée pour commander le fonctionnement des groupes de brassage (3) afin d'amener les modes de production de boisson suivants à pouvoir être sélectivement effectués en réponse à des sélections utilisateur uniques correspondantes :
- un premier mode de production de boisson, dans lequel les groupes de brassage (3) sont commandés pour produire simultanément la même quantité de ladite boisson à partir de substances pouvant être brassées respectives du même type ;
- un deuxième mode de production de boisson, dans lequel les groupes de brassage (3) sont commandés pour produire simultanément la même quantité de ladite boisson à partir de substances pouvant être brassées respectives de types différents ;
- un troisième mode de production de boisson, dans lequel les groupes de brassage (3) sont commandés pour produire simultanément des quantités différentes de ladite boisson à partir de substances pouvant être brassées respectives soit du même type soit de types différents ; et
- un quatrième mode de production de boisson, dans lequel les groupes de brassage (3) sont commandés pour produire simultanément la même quantité de ladite boisson à partir de substances pouvant être brassées respectives du même type, mais en une quantité supérieure à celle produite dans le premier mode de production de boisson.

2. Machine de préparation automatique de boisson (1) selon la revendication 1, dans laquelle les buses de distribution de boisson (4) sont agencées suffisamment proches pour distribuer les boissons respectives soit dans des récipients distincts rapprochés soit dans un unique récipient.

3. Machine de préparation automatique de boisson (1) selon la revendication 1 ou 2, dans laquelle l'unité de commande électronique (6) est en outre configurée pour :
- déterminer le moment où un groupe de brassage (3) est incapable de produire une boisson sélectionnée ; et
- lorsqu'un groupe de brassage (3) est déterminé comme étant incapable de produire une boisson sélectionnée, assigner la production de la boisson sélectionnée qui aurait dû être produite par le groupe de brassage (3) incapable à un groupe de brassage (3) différent.

4. Machine de préparation automatique de boisson (1) selon la revendication 3, dans laquelle l'unité de commande électronique (6) est en outre configurée pour :
- déterminer le moment où une substance pouvant être brassée est épuisée dans une mesure telle qu'une boisson sélectionnée peut ne pas être produite ;
- déterminer le moment où un groupe de brassage (3) est défectueux ou fonctionne mal ; et
- déterminer qu'un groupe de brassage (3) est incapable de produire une boisson sélectionnée lorsque soit une substance pouvant être brassée est épuisée dans une mesure telle qu'une boisson sélectionnée peut ne pas être produite soit un groupe de brassage (3) est défectueux ou fonctionne mal.

5. Machine de préparation automatique de boisson (1) selon l'une quelconque des revendications précédentes, dans laquelle l'unité de commande électronique (6) est en outre configurée pour :
- déterminer un nombre de cycles de production de boisson réalisés par chaque groupe de brassage (3) ; et
- assigner la production des boissons sélectionnées aux groupes de brassage (3) en fonction d'un critère basé sur le nombre de cycles de production de boisson réalisés par chaque groupe de brassage (3).

6. Machine de préparation automatique de boisson (1) selon la revendication 5, dans laquelle l'unité de commande électronique (6) est configurée pour assigner la production des boissons sélectionnées aux groupes de brassage (3) en fonction d'un critère basé sur le nombre de cycles de production de boisson réalisés par chaque groupe de brassage (3) en répartissant la production de boisson entre les groupes de brassage (3) de manière à maintenir l'usure des groupes de brassage (3) aussi uniforme que possible.
